# EUROPÄISCHE PATENTSCHRIFT

(11) **EP 0 553 794 B1**
(45) Veröffentlichungstag und Bekanntmachung des Hinweises auf die Patenterteilung: **22.11.1995**
(21) Anmeldenummer: 93101219.9
(22) Anmeldetag: 27.01.1993
(51) Int. Cl.: F16K 1/226, F16K 1/44

(54) **Absperrarmatur für gas- oder dampfförmige Medien**
Valve for gas or steam
Vanne pour gaz ou vapeur

(30) Priorität: 29.01.1992 DE 4202357
(43) Veröffentlichungstag der Anmeldung: 04.08.1993
(73) Patentinhaber: ZUR STEEGE E.C. GmbH, D-40883 Ratingen (DE)
(72) Erfinder: zur Steege, Wolfgang, Dipl.-Kfm., W-4030 Ratingen 6 (DE)
(74) Vertreter: Zenz, Joachim Klaus, Dipl.-Ing.

(56) Entgegenhaltungen:
- DE-A- 2 229 978
- DE-A- 3 544 466
- US-A- 3 532 321
- US-A- 4 077 432
- US-A- 5 000 422

## Beschreibung

Die Erfindung betrifft eine Absperrarmatur für gas- oder dampfförmige Medien mit einem Gehäuse und einer drehbar in dem Gehäuse angeordneten Klappe, die mindestens eine in der Klappenebene angeordnete Nabe zur Aufnahme einer zugehörigen, durch eine Gehäuseöffnung hindurchgesteckten Welle aufweist, wobei das Gehäuse mit Anschlagleisten versehen ist, an denen die Klappe in der Schließstellung anliegt, und wobei zwischen der Klappe und jeder der Anschlagleisten ein Sperrluftkanal vorgesehen ist.

Derartige Absperrarmaturen sind aus der DE-A-35 44 466 bekannt. Dabei ist die Drehachse einer der Klappenseiten zugeordnet, so daß zwei Abschnitte von Anschlagleisten vorgesehen sein müssen, die einander entgegengerichtet sind und je zu einer Seite der Drehachse verlaufen. Sie enden - in Strömungsrichtung gesehen - vor der Mittelebene der Welle, so daß die Klappe den vorgesehenen Drehwinkel durchlaufen kann. Dabei entsteht an der Drehachse ein kritischer Bereich, da das Medium in die Gehäuseöffnung eintreten und rund um die Welle von einer Klappenseite zur anderen gelangen kann. Dies ist insbesondere beim Einsatz in Verbindung mit giftigen Medien eine extreme Beeinträchtigung.

Der Erfindung liegt die Aufgabe zugrunde, eine Absperrarmatur der eingangs genannten Art zu schaffen, die gegenüber dem gas- oder dampfförmigen Medium praktisch absolut dicht ist und sich daher für den Einsatz in Verbindung mit giftigen Medien eignet.

Zur Lösung dieser Aufgabe ist die Absperrarmatur nach der Erfindung dadurch gekennzeichnet, daß die Gehäuseöffnung den Auslaß einer die Welle umgebenden Sperrluftkammer bildet und daß die Welle mindestens eine Sperrluftbohrung aufweist, die Sperrluft zwischen die Welle und die Nabe fördert.

Das Medium kann also nicht mehr innerhalb der Gehäuseöffnung um die Welle herumströmen und dadurch von einer Klappenseite zur anderen gelangen. Gleichermaßen wird die Nabe mit Sperrluft beaufschlagt. Das Medium wird also auch daran gehindert, in die Nabe einzutreten, innerhalb der Nabe um die Welle herumzuströmen und auf diesem Wege von einer Klappenseite zur anderen zu gelangen. Ferner wird auch der Spaltraum zwischen dem Gehäuse und der Nabe, der im Bereich der Welle zwischen den Anschlagleisten-Enden liegt, von Sperrluft durchströmt. Die gesamte Sperrluftversorgung erfolgt über eine vorzugsweise zentrale, gemeinsame Sperrluftquelle.

Als zusätzlicher Vorteil ergibt sich, daß die aus der Gehäuseöffnung austretende Sperrluft Feststoffablagerungen in der Gehäuseöffnung verhindert. Gleichermaßen werden Feststoffablagerungen im Inneren der Nabe verhindert, was dann von Bedeutung ist, wenn Drehbewegungen zwischen der Nabe und der Welle auftreten.

Die Sperrluftkanäle können ohne weiteres in der Klappe angeordnet werden. Vorteilhafter hingegen ist es, sie als Rinnen in den Anschlagleisten auszubilden. Insbesondere für diesen Fall wird in Weiterbildung der Erfindung vorgeschlagen, die Sperrluftkanäle an die die Welle umgebende Sperrluftkammer anzuschließen, da sich die Anschlagleisten ohnehin in den Bereich der die Welle umgebenden Sperrluftkammer erstrecken und die Anschlüsse durch einfache Bohrungen hergestellt werden können. Bei großen Klappendurchmessern wird allerdings die Sperrluftversorgung der Kanäle über die Sperrluftkammer nicht immer ausreichen. In solchen Fällen wird man die Sperrluftkanäle mit zusätzlichen Anschlüssen versehen. Ggf. wird ausschließlich mit letzteren gearbeitet.

Die Erfindung ist anwendbar auf Konstruktionen, bei denen sich die Nabe jeweils bis zum Klappenumfang erstreckt. Der Ringspalt zwischen der ringförmigen Stirnfläche der Nabe und dem Gehäuse wird unter diesen Umständen mit den aus der Gehäuseöffnung und aus der Nabe austretenden Sperrluftströmen versorgt. Dies bedingt u.U. einen relativ hohen Sperrluftdurchsatz, und zwar selbst dann, wenn unter Inkaufnahme eines entsprechenden Fertigungsaufwandes die Stirnfläche der Nabe an die Krümmung des Gehäuses angepaßt wird. Vorteilhafter ist daher eine Konstruktion, bei der die Nabe mit Abstand zum Klappenumfang endet. Im Bereich dieses Abstandes wird die Klappe bis direkt an die Welle herangeführt. Für diese Konstruktion wird in Weiterbildung der Erfindung vorgeschlagen, zwischen der Welle und den von der Nabe zum Klappenumfang laufenden Klappenkanten Sperrluftführungen vorzusehen. Auf diese Weise wird auch dort, wo die Welle außerhalb der Nabe direkt gegen die Klappe abdichten muß, für eine ausreichende Sperrluftunterstützung gesorgt.

Die hierzu dienenden Sperrluftführungen können ihre Sperrluftversorgung über die Gehäuseöffnung aus der die Welle umgebenden Sperrluftkammer beziehen. Vorteilhafter ist es hingegen, die Sperrluftführungen im Inneren der Nabe münden zu lassen. Die Versorgung erfolgt dann über die durch die Welle führende Sperrluftbohrung, wobei dafür zu sorgen ist, daß zusätzlich zur Beaufschlagung der Sperrluftführungen ausreichend Sperrluft für das Umströmen des übrigen Wellenumfangs zur Verfügung steht. Alternativ oder zusätzlich dazu können die Sperrluftführungen erfindungsgemäß auch in den Sperrluftkanälen der Anschlagleisten münden.

Die Sperrluftführungen können als Rinnen in die Klappenkanten eingearbeitet sein. Fertigungstechnisch günstiger hingegen ist es, sie als Rinnen in der Außenfläche der Welle auszubilden.

Die Nabe kann sich diametral durch die Klappe hindurch erstrecken und zur Aufnahme einer durchgehenden Welle dienen. Die Sperrluftbohrung mündet dann radial in der Außenfläche der Welle. Fertigungstechnisch günstiger hingegen ist es, wenn die Welle im Inneren der Nabe endet und die Sperrluftbohrung in der Stirnfläche der Welle mündet. Um dabei den mit Sperrluft zu beaufschlagenden Innenraum der Nabe zu begrenzen, wird in Weiterbildung der Erfindung vorgeschlagen, daß die Nabe eine dem Ende der Welle zugeordnete Bodenwand aufweist. Der Abstand zwischen dem Ende der Welle und der Bodenwand kann dabei so groß sein, daß das Ende der Welle von der Sperrluft frei umspült werden kann.

Diese Ausführungsform eignet sich für eine Konstruktion, bei der die Klappe auf zwei Wellenstümpen gelagert ist, die je in ein topfförmiges Nabenstück eingreifen, wobei einer der Wellenstümpfe drehfest mit dem zugehörigen Nabentopf verbunden ist. Denkbar ist auch eine fliegende Lagerung der Klappe mit nur einem Wellenstumpf und einem zugehörigen Nabentopf.

Dabei ist es besonders vorteilhaft, daß zwischen der Bodenwand und der Stirnfläche des Wellenstumpfes eine die seitlichen Sperrluftführungen verbindende Rinne ausgebildet ist, in der die Sperrluftbohrung mündet. Bei dieser Konstruktion kann darauf verzichtet werden, den gesamten Umfang der Welle mit Sperrluft zu umspülen. Vielmehr bilden die bis zur Stirnfläche des Wellenstumpfes heruntergezogenen Sperrluftführungen seitliche Sperrluftschleier, die durch einen unteren, von der Rinne erzeugten Sperrluftschleier miteinander verbunden sind. Der gesamte Wellenstumpf ist also durch Sperrluft geschützt, wobei mit relativ geringen Liefermengen gearbeitet werden kann.

Die Erfindung wird im folgenden anhand bevorzugter Ausführungsbeispiele im Zusammenhang mit der beiliegenden Zeichnung näher erläutert. Die Zeichnung zeigt in:
- Fig. 1: einen Schnitt durch eine erste Ausführungsform einer erfindungsgemäßen Absperrarmatur, und zwar im wesentlichen senkrecht zur Strömungsrichtung, wobei der Schnitt der Linie I-I in Fig. 2 folgt;
- Fig. 2: einen Schnitt entlang der Linie II-II in Fig. 1;
- Fig. 3: einen Teilschnitt durch eine zweite Ausführungsform einer erfindungsgemäßen Absperrarmatur, wiederum senkrecht zur Strömungsrichtung, und zwar entlang der Linie III-III in Fig. 4;
- Fig. 4: einen Schnitt entlang der Linie IV-IV in Fig. 3.

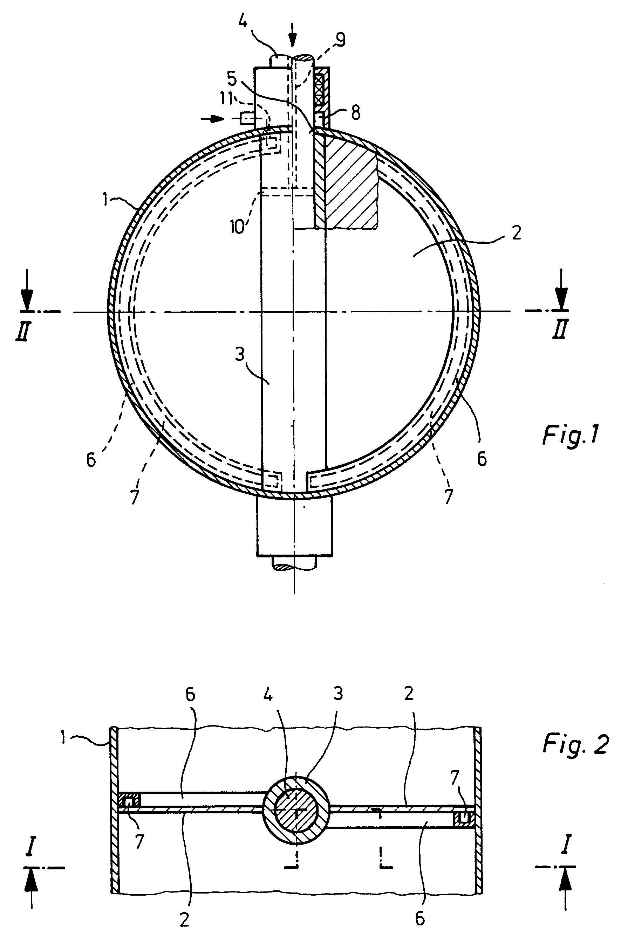

Die Absperrarmatur nach Fig. 1 und 2 weist ein Gehäuse 1 auf, in welchem eine schwenkbare Klappe 2 angeordnet ist. In der Klappenebene verläuft eine Nabe 3, die mit der Klappe verschweißt ist und zur Aufnahme einer durchgehenden Welle 4 dient. Die Welle 4 ist durch das Gehäuse 2 hindurchgesteckt, wobei sie im oberen Bereich eine Gehäuseöffnung 5 durchdringt. Der untere Bereich ist entsprechend gestaltet. Die Welle ist drehfest mit der Nabe verbunden.

In der gezeigten Schließstellung liegt die Klappe an Anschlagleisten 6 an, die mit dem Gehäuse verbunden sind und sich bis an die Nabe heran erstrecken. In jeder Anschlagleiste ist ein Sperrluftkanal 7 ausgebildet, der in der Schließstellung das Medium daran hindert, sich einen Weg zwischen dem Klappenrand und dem Gehäuse zu suchen und auf diese Weise von einer Klappenseite zur anderen zu gelangen.

Ferner wird das Medium daran gehindert, in die Gehäuseöffnung 5 einzutreten, innerhalb der Gehäuseöffnung die Welle 4 zu umströmen und sodann auf der stromab gelegenen Seite der Klappe 2 die Gehäuseöffnung zu verlassen. Hierzu dient eine die Welle umgebende Sperrluftkammer 8, deren Auslaß von der Gehäuseöffnung 5 gebildet wird. Als zusätzlicher Vorteil ergibt sich, daß der durch die Gehäuseöffnung 5 hindurchtretende Sperrluftstrom Feststoffablagerungen in der Gehäuseöffnung verhindert.

Schließlich wird auch der Innenraum der Nabe 3 mit Sperrluft beaufschlagt. Hierzu weist die Welle 4 eine Sperrluftbohrung 9 auf, die über radiale Bohrungen 10 mit der Außenfläche der Welle verbunden ist. Die durch die Welle eingeleitete Sperrluft tritt stirnseitig aus der Nabe 3 aus und dient im Verein mit dem aus der Gehäuseöffnung 5 kommenden Sperrluftstrom dazu, auch denjenigen Spaltraum zwischen der Nabe und dem Gehäuse zu beaufschlagen, der im Bereich der Welle zwischen den Enden der Anschlagleisten vorhanden ist. Ein Durchtritt des Mediums durch diesen Spaltraum hindurch von einer Klappenseite zur anderen wird also unterbunden. Vor allen Dingen wird das Medium daran gehindert, in die Nabe 3 einzutreten, hier die Welle 4 zu umströmen und auf diesem Wege die Klappe zu passieren. Auch können keine Feststoffablagerungen in der Nabe auftreten.

Die Sperrlufterzeugung erfolgt über eine zentrale Sperrluftquelle. Wie in Fig. 1 angedeutet, dient eine Bohrung 11 dazu, den Sperrluftkanal 7 der zugehörigen Anschlagleiste 6 an die Sperrluftkammer 8 anzuschließen. Ggf. verfügen die Sperrluftkanäle 7 über weitere Sperrluftanschlüsse, sofern die Lieferung durch die Bohrung 11 nicht ausreicht. U.U. kann auf die Bohrung 11 auch ganz verzichtet werden.

Durch die Sperrluftkanäle 7 wird der Umfang der Klappe 2 abgedichtet. Die Abdichtung des Wellenbereichs erfolgt zum einen durch den Sperrluftstrom, der aus der Sperrluftkammer 8 kommt und die Gehäuseöffnung 5 passiert, und zum anderen durch den aus der Nabe 3 austretenden Sperrluftstrom. Insgesamt ergibt sich eine praktisch absolute Abdichtung der Absperrarmatur gegenüber den gas- oder dampfförmigen Medien, so daß die Absperrarmatur auch für giftige Medien eingesetzt werden kann. Dennoch bleibt die Konstruktion einfach und wirtschaftlich.

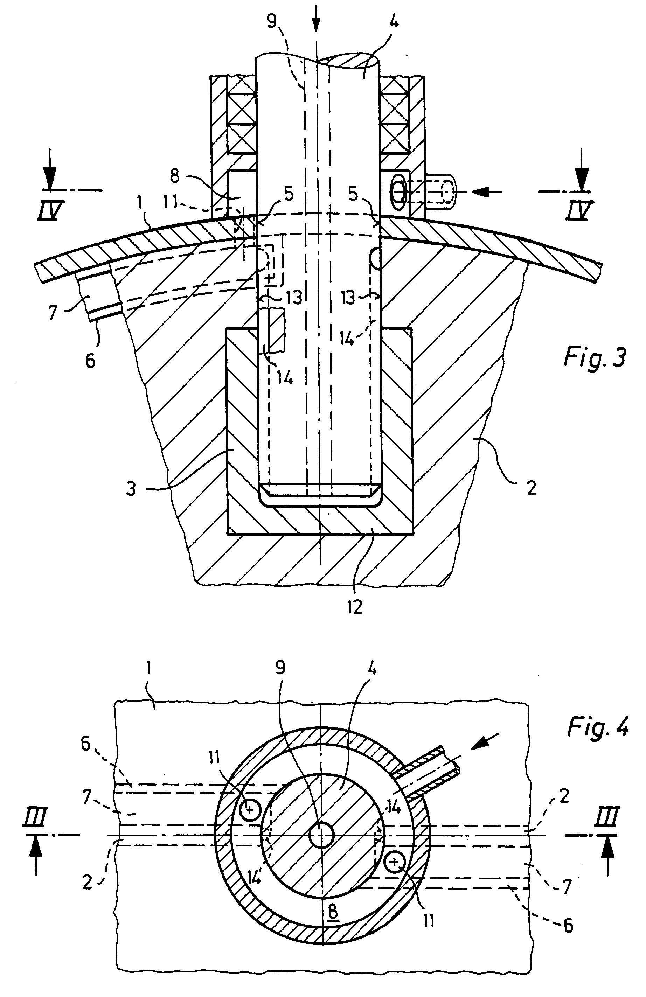

Die Ausführungsform nach den Figuren 3 und 4 unterscheidet sich von der nach den Figuren 1 und 2 vor allen Dingen dadurch, daß die Nabe 3 und die Welle 4 nicht mehr durchgehend ausgebildet sind. Die Welle bildet einen Wellenstumpf, und die Nabe weist eine Bodenwand 12 auf, so daß sie eine topfförmige Gestalt erhält. Diametral gegenüberliegend kann die Armatur mit einer entsprechenden Konstruktion versehen sein, wobei über eine dieser Konstruktionen der Antrieb der Klappe erfolgt.

Im übrigen endet die Nabe 3 mit Abstand vor dem Klappenumfang, so daß in diesem Bereich die Klappe 2 mit ihren Kanten 13 bis an die Welle 4 herangeführt ist. Um auch diesen Bereich mit Sperrluft zu beaufschlagen, ist die Welle 4 auf ihrer Außenfläche mit rinnenförmigen Sperrluftführungen 14 versehen, die einerseits im Inneren der Nabe 3 und andererseits in den Sperrluftkanälen 7 der Anschlagleisten 6 münden. Im übrigen gestattet es die wellenstumpfförmige Gestalt der Welle 4, die Sperrluftbohrung 9 mit Abstand vor der Bodenwand 12 münden zu lassen. Der mit Sperrluft beaufschlagte Bereich innerhalb der Nabe 3 ist also klein. Er dient dazu, die Sperrluft zu verteilen, so daß ein gleichmäßiger Sperrluftaustritt aus der Nabe 3 gewährleistet wird, und zwar in Verbindung mit einer ausreichenden Sperrluftversorgung der von der Welle 4 gebildeten Sperrluftführungen 14.

Fig. 4 zeigt deutlich die Bohrungen 11, die die Sperrluftkammer 8 an die Sperrluftkanäle 7 der Anschlagleisten 6 anschließen.

Im übrigen bringt die Konstruktion nach den Figuren 3 und 4 den Vorteil mit sich, daß die ringförmige Stirnfläche der Nabe 3 mit der Klappe 2 verschweißt wird. Zwischen den Enden der Anschlagleisten 6 sind also nur die Randabschnitte der Klappe mit Sperrluft zu versorgen, was ohne weiteres über die Gehäuseöffnung 5 möglich ist. Im übrigen können bei Bedarf die Sperrluftführungen 14 bis in die Gehäuseöffnung 5 hinein erstreckt werden.

Im Rahmen der Erfindung sind durchaus Abwandlungsmöglichkeiten gegeben. So kann die Nabe 3, wie in Fig. 1 gezeigt, durchgehend ausgebildet sein, jedoch, ähnlich wie in Fig. 3, mit Abstand zum Klappenumfang enden. Ferner ist auch bei einer derartigen Konstruktion die Verwendung von Wellenstümpfen anstelle einer durchgehenden Welle möglich. Die Sperrluftkanäle 7 können in der Klappe 2 bzw. in mit der Klappe verbundenen Leisten ausgebildet sein. Auch können die Kanäle von einander gegenüberliegenden Vertiefungen gebildet werden. Die Sperrluftbohrung 9 des Wellenstumpfes nach Fig. 3 kann zusätzlich zu ihrer stirnseitigen Mündung mit radialen Kanälen verbunden sein, wie sie in Fig. 1 dargestellt sind.

## Patentansprüche

1. Absperrarmatur für gas- oder dampfförmige Medien mit einem Gehäuse (1) und einer drehbar in dem Gehäuse angeordneten Klappe (2), die mindestens eine in der Klappenebene angeordnete Nabe (3) zur Aufnahme einer zugehörigen, durch eine Gehäuseöffnung (5) hindurchgesteckten Welle (4) aufweist, wobei das Gehäuse mit Anschlagleisten (6) versehen ist, an denen die Klappe in der Schließstellung anliegt, und wobei zwischen der Klappe und jeder der Anschlagleisten ein Sperrluftkanal (7) vorgesehen ist,
**dadurch gekennzeichnet,**
daß die Gehäuseöffnung den Auslaß einer die Welle umgebenden Sperrluftkammer (8) bildet und daß die Welle mindestens eine Sperrluftbohrung (9) aufweist, die Sperrluft zwischen die Welle und die Nabe fördert.

2. Absperrarmatur nach Anspruch 1, dadurch gekennzeichnet, daß die Sperrluftkanäle (7) als Rinnen in den Anschlagleisten (6) ausgebildet sind.

3. Absperrarmatur nach Anspruch 1 oder 2, dadurch gekennzeichnet, daß die Sperrlufkanäle (7) an die die Welle (4) umgebende Sperrluftkammer (8) angeschlossen sind.

4. Absperrarmatur nach einem der Ansprüche 1 bis 3, dadurch gekennzeichnet, daß die Nabe (3) mit Abstand zum Klappenumfang endet und daß zwischen der Welle (4) und den von der Nabe zum Klappenumfang laufenden Klappenkanten (13) Sperrluftführungen (14) vorgesehen sind.

5. Absperrarmatur nach Anspruch 4, dadurch gekennzeichnet, daß die Sperrluftführungen (14) im Inneren der Nabe (3) münden.

6. Absperrarmatur nach Anspruch 4 oder 5, dadurch gekennzeichnet, daß die Sperrluftführungen (14) in den Sperrluftkanälen (7) münden.

7. Absperrarmatur nach einem der Ansprüche 4 bis 6, dadurch gekennzeichnet, daß die Sperrluftführungen (14) als Rinnen in der Außenfläche der Welle (4) ausgebildet sind.

8. Absperrarmatur nach einem der Ansprüche 1 bis 7, dadurch gekennzeichnet, daß die Welle (4) im Inneren der Nabe (3) endet und daß die Sperrluftbohrung (9) in der Stirnfläche des Wellenstumpfes mündet.

9. Ansperrarmatur nach Anspruch 8, dadurch gekennzeichnet, daß die Nabe (3) eine dem Ende der Welle (4) zugeordnete Bodenwand (12) aufweist.

10. Absperrarmatur nach Anspruch 9, dadurch gekennzeichnet, daß zwischen der Bodenwand (12) der Nabe (3) und der Stirnfläche des Wellenstumpfes eine die seitlichen Sperrluftführungen (14) verbindende Rinne ausgebildet ist, in der die Sperrluftbohrung (9) mündet.

## Claims

1. Shut-off valve for gaseous or vaporous media with a housing (1) and a flap (3) pivotally arranged in the housing which has at least one hub (3) arranged in the plane of the flap for receiving an associated shaft (4) inserted through an opening (5) in the housing, the housing being provided with engagement bars (6), which the flap engages in the closed position, and a blocking air passage (7) being provided between the flap and each of the engagement bars, characterised in that the opening in the housing constitutes the outlet of a blocking air chamber (8) surrounding the shaft and that the shaft has at least one blocking air bore (9) which transmits the blocking air between the shaft and the hub.

2. Shut-off valve as claimed in claim 1, characterised in that the blocking air passages (7) are constructed as channels in the engagement bars (6).

3. Shut-off valve as claimed in claim 1 or 2, characterised in that the blocking air passages (7) are connected to the blocking air chamber (8) surrounding the shaft (4).

4. Shut-off valve as claimed in one of claims 1 to 3, characterised in that the hub (3) terminates at a distance from the periphery of the flap and that blocking air guideways (14) are provided between the shaft (4) and the edges (13) of the flap extending from the hub to the periphery of the flap.

5. Shut-off valve as claimed in claim 4, characterised in that the blocking air passages (14) communicate with the interior of the hub (3).

6. Shut-off valve as claimed in claim 4 or 5, characterised in that the blocking air guideways (14) communicate with the blocking air passages (7).

7. Shut-off valve as claimed in one of claims 4 to 6, characterised in that the blocking air guideways (14) are constructed as channels in the external surface of the shaft (4).

8. Shut-off valve as claimed in one of claims 1 to 7, characterised in that the shaft (4) terminates in the interior of the hub (3) and that the blocking air bore (9) opens out in the end surface of the shaft.

9. Shut-off valve as claimed in claim 8, characterised in that the hub (3) has a base wall (12) associated with the end of shaft (4).

10. Shut-off valve as claimed in claim 9, characterised in that formed between the base wall (12) of the hub (3) and the end surface of the stub of the shaft there is a channel which connects the lateral blocking air guideways (14) and with which the blocking air bore (9) communicates.

## Revendications

1. Robinet d'arrêt pour des milieux gazeux ou sous forme de vapeur, avec un corps (1) et un volet (2), disposé tournant dans le corps et présentant au moins un moyeu (3) disposé dans le plan de volet, pour supporter un arbre (4) afférent, enfilé par une ouverture de corps (5), le corps étant pourvu de bandes de butée (6), sur lesquelles le volet appuie lorsqu'il est en position de fermeture, et un canal d'air de barrage (7) étant prévu entre le volet et chacune des bandes de butée, caractérisé en ce que l'ouverture de corps constitue l'évacuation d'une chambre à air de barrage (8) entourant l'arbre et en ce que l'arbre présente au moins un perçage d'air de barrage (9), véhiculant l'air de barrage entre l'arbre et le moyeu.

2. Robinet d'arrêt selon la revendication 1, caractérisé en ce que les canaux d'air de barrage (7) sont réalisés sous forme de goulottes ménagées dans les bandes de butée (6).

3. Robinet d'arrêt selon la revendications 1 ou 2, caractérisé en ce que les canaux d'air de barrage (7) sont raccordés à la chambre à air de barrage (8) entourant l'arbre (4).

4. Robinet d'arrêt selon l'une des revendications 1 à 3, caractérisé en ce que le moyeu (3) s'achève à distance de la périphérie du volet et en ce que des guidages d'air de barrage (14) sont prévus entre l'arbre (4) et les arêtes de volet (13) courant du moyeu à la périphérie du volet.

5. Robinet d'arrêt selon la revendication 4, caractérisé en ce que les guidages d'air de barrage (14) débouchent à l'intérieur du moyeu (3).

6. Robinet d'arrêt selon la revendication 4 ou 5, caractérisé en ce que les guidages d'air de barrage (14) débouchent dans les canaux d'air de barrage (7).

7. Robinet d'arrêt selon l'une des revendications 4 à 6, caractérisé en ce que les guidages d'air de barrage (14) sont réalisés sous forme de goulottes ménagées dans la surface extérieure de l'arbre (4).

8. Robinet d'arrêt selon l'une des revendications 1 à 7, caractérisé en ce que l'arbre (4) s'achève à l'intérieur du moyeu (3) et en ce que le percage d'air de barrage (9) débouche dans la face frontale du bout d'arbre.

9. Robinet d'arrêt selon la revendication 8, caractérisé en ce que le moyeu (3) présente une paroi de fond (12) associée à l'extrémité de l'arbre (4).

10. Robinet d'arrêt selon la revendication 9, caractérisé en ce qu'une goulotte, reliant les guidages d'air de barrage (14) latéraux et dans laquelle débouche le perçage d'air de barrage (9), est réalisée entre la paroi de fond (12) du moyeu (3) et la face frontale du bout d'arbre.
